# FASCICULE DE BREVET EUROPEEN

(11) **EP 2 156 126 B1**
(45) Date de publication et mention de la délivrance du brevet: **17.10.2012**
(21) Numéro de dépôt: 08805864.9
(22) Date de dépôt: 27.05.2008
(51) Int. Cl.: F27D 17/00, F27B 13/14, B01D 53/10

(54) **PROCEDE D'OPTIMISATION DE LA COMMANDE D'UN CENTRE DE TRAITEMENT DES FUMEES D'UN FOUR A FEU TOURNANT DE CUISSON DE BLOCS CARBONES**
VERFAHREN ZUR OPTIMIERUNG DER STEUERUNG EINES ZENTRUMS ZUR VERARBEITUNG VON RAUCH AUS EINEM DREHOFEN ZUM BACKEN VON KOHLENSTOFFBLÖCKEN
METHOD FOR OPTIMISING THE CONTROL OF A CENTRE FOR THE TREATMENT OF FUMES FROM A ROTARY FURNACE FOR BAKING CARBON BLOCKS

(30) Priorité: 21.06.2007 FR 0704432
(43) Date de publication de la demande: 24.02.2010
(73) Titulaire: SOLIOS Environnement, 78100 Saint-Germain-en-Laye (FR); Solios Carbone, 69700 Givors (FR)
(72) Inventeur: MAHIEU, Pierre, F-69001 Lyon (FR); MALARD, Thierry, F-95290 L'isle-adam (FR)
(74) Mandataire: Cabinet Plasseraud
(86) Numéro de dépôt international: PCT/FR2008/050920
(87) Numéro de publication internationale: WO 2009/000992

(56) Documents cités:
- EP-A- 0 252 856
- EP-A- 1 742 003
- DE-A1- 4 002 554
- DE-A1- 4 338 928
- FR-A- 2 887 782

## Description

L'invention concerne le domaine de la cuisson des blocs carbonés destinés à l'électrométallurgie, et plus particulièrement la cuisson d'anodes et de cathodes en carbone, destinées à la production par électrolyse de l'aluminium, et l'invention se rapporte plus précisément à un procédé d'optimisation de la commande d'un centre de traitement des fumées, ci-après dénommé CTF, destiné à épurer des fumées de cuisson provenant d'un four à cuire, ci-après dénommé FAC, desdits blocs carbonés, le FAC étant un four de cuisson du type « à feu tournant » et, de préférence, « à chambres ouvertes » ou « à chambres couvertes », dont les fumées de cuisson sont aspirées par au moins une rampe d'aspiration du FAC et collectées dans un conduit des fumées conduisant les fumées au CTF.

Le CTF est également d'un type bien connu, comportant une tour de refroidissement des fumées par pulvérisation d'eau dans lesdites fumées à la sortie dudit conduit, et au moins un réacteur de neutralisation physico-chimique des fumées par mise en contact des fumées avec un réactif pulvérulent, tel que de l'alumine, puis filtrage du réactif chargé, en particulier par adsorption de composés fluorés suite au contact avec les fumées, et filtration des poussières des fumées, et recyclage dans ledit réacteur d'au moins une fraction du réactif filtré et son mélange à du réactif frais.

On sait que les anodes et les cathodes utilisées pour l'électrolyse de l'aluminium sont des blocs de carbone nécessaires à la réaction chimique de l'électrolyse de l'alumine (Al2O3) pour obtenir l'aluminium (Al). Les matériaux de base entrant dans la fabrication de telles anodes ou cathodes sont le coke de pétrole calciné constituant les agrégats, et le brai de houille, utilisé comme liant liquide. Des blocs crus, tout d'abord réalisés par malaxage intensif des matériaux de base et compaction pour mise en forme de la pâte formée à partir de ces deux constituants principaux, sont ensuite cuits pendant une centaine d'heures à une température de l'ordre de 1100°C. Ce traitement thermique a pour effet de transformer le brai en coke et, par voie de conséquence, de conférer une tenue mécanique et une conductibilité électrique satisfaisantes aux anodes et cathodes pour leur exploitation en cuve d'électrolyse.

Ces blocs carbonés crus sont cuits dans des fours de cuisson d'un type bien connu, dénommé « four à chambres à feu(x) tournant(s) » ou encore « fours à feu(x) tournant(s) », qui sont utilisés de sorte à mettre en oeuvre le principe d'un échangeur thermique solide/gaz à contre-courant.

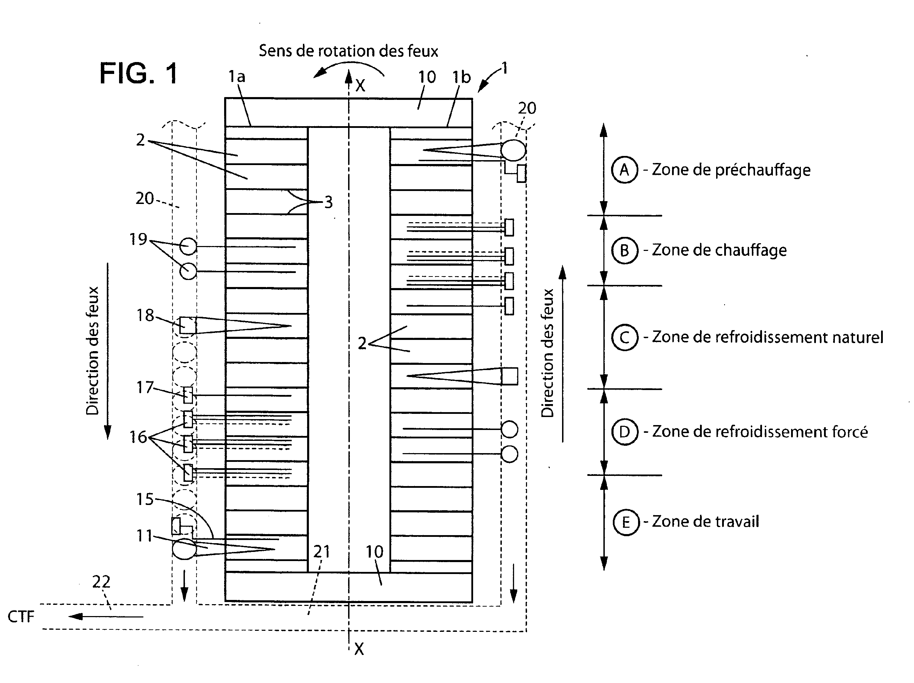

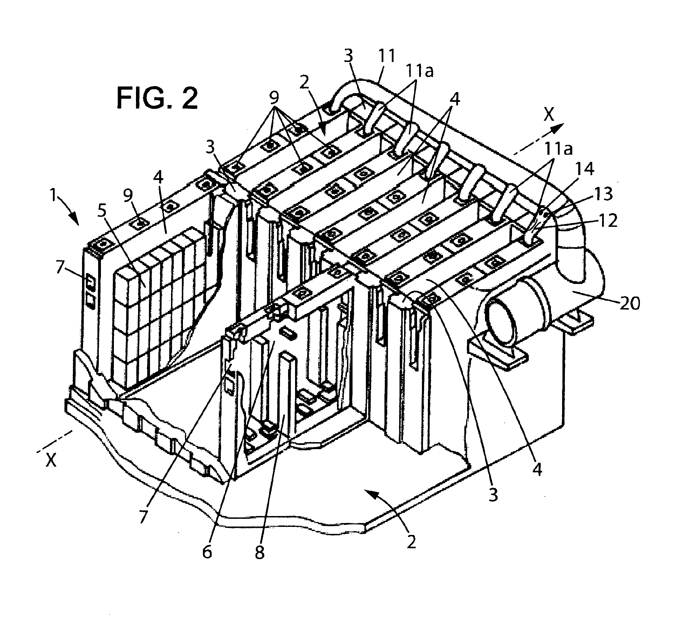

Des fours à cuire (FAC) des anodes sont décrits notamment dans les documents de brevets suivants : US 4 859 175, WO 91/19147, US 6 339 729, US 6 436 335, CA 2 550 880, EP-A-0 252 856 et EP-A-1742003 auxquels on se reportera pour davantage de précisions à leur sujet. On rappelle cependant leur structure et leur fonctionnement, en référence aux figures 1 et 2 ci-après, représentant respectivement une vue en plan schématisée de la structure d'un four à feu(x) tournant(s) et chambres ouvertes, à deux feux dans cet exemple pour la figure 1, et une vue partielle en perspective avec arrachement représentant la structure interne d'un tel four, pour la figure 2.

Le four à cuire (FAC) 1 comprend deux cuvelages ou travées 1 a et 1 b parallèles, s'étendant selon l'axe longitudinal XX sur la longueur du four et comportant chacun(e) une succession de chambres 2 transversales (perpendiculaires à l'axe XX), séparées les unes des autres par des murs transversaux 3. Chaque chambre 2 est constituée, dans sa longueur, c'est-à-dire dans la direction transversale du four 1, par la juxtaposition, en alternance, d'alvéoles 4, ouverts à leur partie supérieure, pour permettre le chargement des blocs carbonés à cuire et le déchargement des blocs cuits refroidis, et dans lesquels sont empilés les blocs carbonés 5 à cuire noyés dans une poussière carbonée, et des cloisons chauffantes creuses 6, à parois minces. Les cloisons creuses 6 d'une chambre 2 sont dans le prolongement longitudinal (parallèle au grand axe XX du four 1) des cloisons creuses 6 des autres chambres 2 de la même travée 1 a ou 1 b et les cloisons creuses 6 sont en communication les unes avec les autres par des lucarnes 7 à la partie supérieure de leurs parois longitudinales, en regard de passages longitudinaux ménagés à ce niveau dans les murs transversaux 3, de sorte que les cloisons creuses 6 forment des lignes de cloisons longitudinales, disposées parallèlement au grand axe XX du four et dans lesquelles vont circuler des fluides gazeux (air comburant, gaz combustibles et gaz et fumées de combustion) permettant d'assurer la préchauffe et la cuisson des anodes 5, puis leur refroidissement. Les cloisons creuses 6 comportent, en outre, un dispositif 8 pour allonger et répartir plus uniformément le trajet des gaz ou fumées de combustion et ces cloisons creuses 6 sont munies, à leur partie supérieure, d'ouvertures 9, dites « ouvreaux », obturables par des couvercles amovibles.

Les deux travées 1a et 1 b du four 1 sont mises en communication à leurs extrémités longitudinales par des carneaux de virage 10, qui permettent de transférer les fluides gazeux d'une travée à l'autre, et, parfois même d'une extrémité de chaque ligne de cloisons creuses 6 d'une travée 1a ou 1b à l'extrémité de la ligne de cloisons creuses 6 correspondante sur l'autre travée 1b ou 1a.

Le principe d'exploitation des fours à feu(x) tournant(s), également dénommés fours « à avancement de feu(x) », consiste à amener un front de flammes à se déplacer d'une chambre 2 à une autre qui lui est adjacente au cours d'un cycle, chaque chambre 2 subissant successivement des stades de préchauffage, chauffage forcé, plein feu, puis refroidissement (naturel puis forcé).

La cuisson des anodes 5 est réalisée par un ou plusieurs feux ou groupes de feux, qui se déplacent cycliquement de chambre en chambre (dans le sens indiqué par les flèches) comme représenté sur la figure 1 (deux groupes de feux étant représentés). Chaque feu ou groupe de feux est composé de cinq zones successives A à E, qui sont, comme représenté sur la figure 1, et de l'aval vers l'amont par rapport au sens d'écoulement des fluides gazeux dans les lignes de cloisons creuses 6, et dans le sens contraire aux déplacements cycliques de chambre en chambre :
A) Une zone de préchauffage comportant, en se reportant au feu de la travée 1a, et en tenant compte du sens de rotation des feux indiqué par la flèche au niveau du carneau de virage 10 à l'extrémité du four 1 en haut sur la figure 1 :
   - une rampe d'aspiration 11 équipée, pour au moins une cloison creuse 6 de la chambre 2 au-dessus de laquelle cette rampe d'aspiration s'étend, d'un analyseur-détecteur de la teneur en monoxyde de carbone (CO) des fumées collectées dans la rampe d'aspiration 11, ainsi que d'un système de mesure et de réglage du débit des gaz et fumées de combustion par ligne de cloisons creuses 6, ce système pouvant comprendre, dans chaque pipe d'aspiration 11a qui est solidaire de la rampe d'aspiration 11 et débouchant dans cette dernière, d'une part, et, d'autre part, engagée dans l'ouverture 9 de l'une respectivement des cloisons creuses 6 de cette chambre 2, un volet d'obturation réglable pivoté par un actionneur de volet, pour le réglage du débit, ainsi qu'un débitmètre 12, par exemple de type « à tube de Venturi » , éventuellement à cet endroit, dans la pipe 11a correspondante, un capteur de température (thermocouple) 13 de mesure de la température des fumées de combustion à l'aspiration, et un analyseur-détecteur de CO 14 ; et
   - une rampe de mesure de pré-chauffage 15, située en amont de la rampe d'aspiration 11, généralement au dessus de la même chambre 2, et équipée de capteurs de température (thermocouples) et de capteurs de pression pour mesurer la dépression statique et la température régnant dans chacune des cloisons creuses 6 de cette chambre afin de pouvoir afficher et régler cette dépression et cette température de la zone de préchauffage;
B) Une zone de chauffage comportant :
   - plusieurs rampes de chauffage identiques 16, deux ou, de préférence, trois, comme représenté sur la figure 1 ; chacune équipée d'injecteurs de combustible (liquide ou gazeux), éventuellement de brûleurs, et de capteurs de température (thermocouples), chacune des rampes 16 s'étendant au-dessus de l'une des chambres respectivement d'un nombre correspondant de chambres 2 adjacentes, de sorte que les injecteurs de chaque rampe de chauffage 16 sont engagés dans les ouvertures 9 des cloisons creuses 6 pour y injecter le combustible ;
C) Une zone de soufflage ou de refroidissement naturel comportant :
   - une rampe dite de « point zéro » 17, s'étendant au-dessus de la chambre 2 immédiatement en amont de celle en-dessous de la rampe de chauffage 16 la plus en amont, et équipée de capteurs de pression pour mesurer la pression statique régnant dans chacune des cloisons creuses 6 de cette chambre 2, afin de pouvoir régler cette pression comme indiqué ci-après, et
   - une rampe de soufflage 18, équipée de moto ventilateurs munis d'un dispositif permettant le réglage du débit d'air ambiant insufflé dans chacune des cloisons creuses 6 d'une chambre 2 en amont de celle située sous la rampe de point zéro 17, de sorte que les débits d'air ambiant insufflés dans ces cloisons creuses 6 peuvent être régulés de sorte à obtenir une pression voulue (légère surpression ou légère dépression) au niveau de la rampe de point zéro 17 ;
D) Une zone de refroidissement forcé, qui s'étend typiquement sur trois chambres 2 en amont de la rampe de soufflage 18, et qui comporte, dans cet exemple, deux rampes de refroidissement 19 parallèles, chacune équipée de moto ventilateurs et de pipes de soufflage insufflant de l'air ambiant dans les cloisons creuses 6 de la chambre 2 correspondante ; et
E) Une zone de travail, s'étendant en amont des rampes de refroidissement 19 et permettant l'enfournement et le défournement des anodes 5, et l'entretien des chambres 2.

Le chauffage du four 1 est ainsi assuré par les rampes de chauffage 16, dont les injecteurs sont introduits, via les ouvertures 9, dans les cloisons creuses 6 des chambres 2 concernées. En amont des rampes de chauffage 16 (par rapport au sens d'avancement du feu et au sens de circulation de l'air et des gaz et fumées de combustion dans les lignes de cloisons creuses 6), la rampe de soufflage 18 et la ou les rampe(s) de refroidissement 19 comportent des pipes d'insufflation d'air de refroidissement et de combustion alimentées par les moto ventilateurs, ces pipes étant connectées, via les ouvertures 9, aux cloisons creuses 6 des chambres 2 concernées. En aval des rampes de chauffage 16, on dispose de la rampe d'aspiration 11 pour extraire les gaz et fumées de combustion, désignés dans leur ensemble par les termes « fumées de combustion », qui circulent dans les lignes de cloisons creuses 6.

Le chauffage et la cuisson des anodes 5 sont assurés à la fois par la combustion du combustible (gazeux ou liquide) injecté, de manière contrôlée, par les rampes de chauffage 16, et, dans une mesure sensiblement égale, par la combustion de matières volatiles (telles que des hydrocarbures aromatiques polycycliques) du brai diffusées par les anodes 5 dans les alvéoles 4 des chambres 2 en zones de préchauffage et chauffage, ces matières volatiles, en grande partie combustible, diffusées dans les alvéoles 4 pouvant s'écouler dans les deux cloisons creuses 6 adjacentes par des interstices de dégazage ménagés dans ces cloisons pour s'enflammer dans ces deux cloisons, grâce à de l'air comburant résiduel présent, à ce niveau, parmi les fumées de combustion dans ces cloisons creuses 6.

Ainsi, la circulation de l'air et des fumées de combustion s'effectue le long des lignes de cloisons creuses 6, et une dépression imposée en aval de la zone de chauffage B par la rampe d'aspiration 11 à l'extrémité aval de la zone de préchauffage A, permet de contrôler le débit des fumées de combustion à l'intérieur des cloisons creuses 6, tandis qu'une partie de l'air provenant des zones de refroidissement C et D, grâce aux rampes de refroidissement 19 et l'air soufflé en provenance de la rampe de soufflage 18, est préchauffé dans les cloisons creuses 6, en refroidissant les anodes 5 cuites dans les alvéoles 4 adjacents, au cours de son trajet et sert de comburant lorsqu'il parvient dans la zone de chauffage B.

Au fur et à mesure que la cuisson des anodes 5 se produit, on fait avancer cycliquement (par exemple toutes les 24 heures environ) d'une chambre 2 l'ensemble des rampes 11 à 19 (excepté les deux rampes de chauffage amont relativement au sens du feu) et les équipements et appareillages de mesures et d'enregistrement associés, chaque chambre 2 assurant ainsi, successivement, en amont de la zone de préchauffage A, une fonction de chargement des blocs carbonés crus 5, puis, dans la zone de préchauffage A, une fonction de préchauffage naturel des blocs 5 par les fumées de combustion du combustible et des vapeurs de brai qui quittent les alvéoles 4 en pénétrant dans les cloisons creuses 6, compte tenu de la dépression dans les cloisons creuses 6 des chambres 2 en zone de préchauffage A, puis, dans la zone de chauffage B ou de cuisson, une fonction de chauffage des blocs 5 à environ 1100°C, et enfin, dans les zones de refroidissement C et D, une fonction de refroidissement des blocs cuits 5 par l'air ambiant et, corrélativement, de préchauffage de cet air constituant le comburant du four 1, la zone de refroidissement forcé D étant suivie, dans le sens opposé au sens d'avancement du feu et de circulation des fumées de combustion, d'une zone E de déchargement des blocs carbonés 5 refroidis, puis éventuellement de chargement des blocs carbonés crus dans les alvéoles 4.

Le procédé de régulation du FAC 1 comprend essentiellement la régulation en température et/ou en pression des zones de préchauffage A, chauffage B et soufflage ou refroidissement naturel C du four 1, ainsi que des étapes d'optimisation de la combustion par ajustement de l'injection du combustible par les rampes de chauffage 16, en fonction de la teneur en CO des fumées de combustion, telle que mesurée dans la rampe d'aspiration 11 par le ou les détecteurs de CO 14 précités.

Pour assurer la conduite et la surveillance du FAC 1, le système de contrôle-commande de ce dernier peut comporter deux niveaux. Le premier peut s'étendre à l'ensemble des rampes 11 à 19, équipées de capteurs et d'actionneurs pilotés par des automates programmables, ainsi qu'à un réseau local d'atelier pour la communication entre les automates, ainsi que pour l'échange de données entre le premier niveau et le second, qui comprend un système central de calculateurs avec leurs équipements périphériques, permettant la communication avec le premier niveau, la supervision de l'ensemble des feux, la régulation centrale du FAC 1, la saisie de lois de consigne, la gestion des historiques des données des cuissons, la gestion des événements, et la mémorisation et l'édition des rapports de fin de cuisson.

Chaque feu est régulé par ligne de cloisons creuses 6 depuis la rampe de soufflage 18 jusqu'à la rampe d'aspiration 11, et, pour chaque ligne de cloisons creuses 6, la régulation est par exemple réalisée par un régulateur de type PID (Proportionnel Intégral et Dérivé).

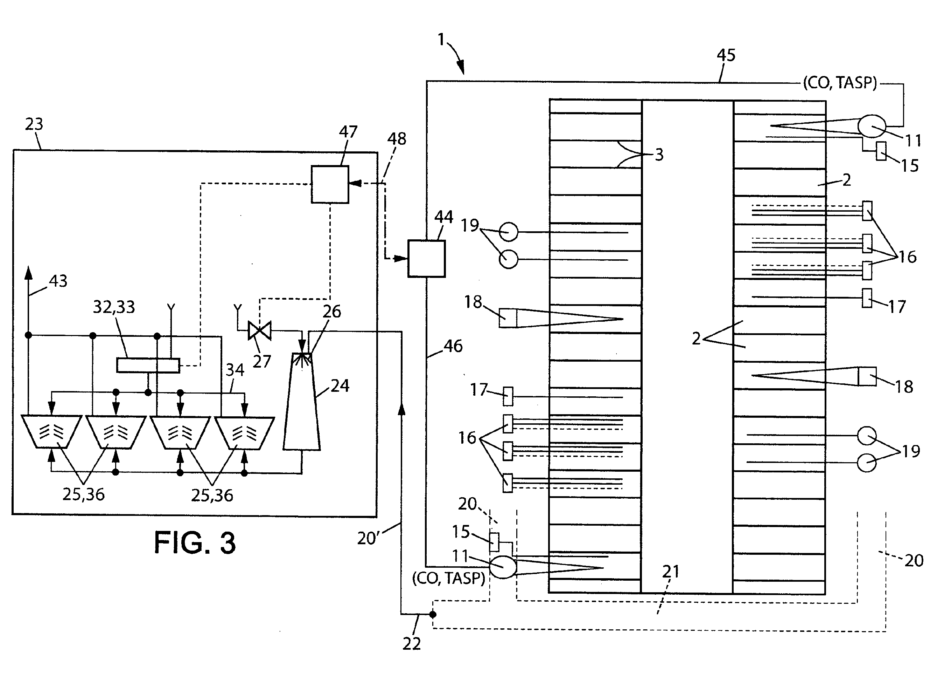

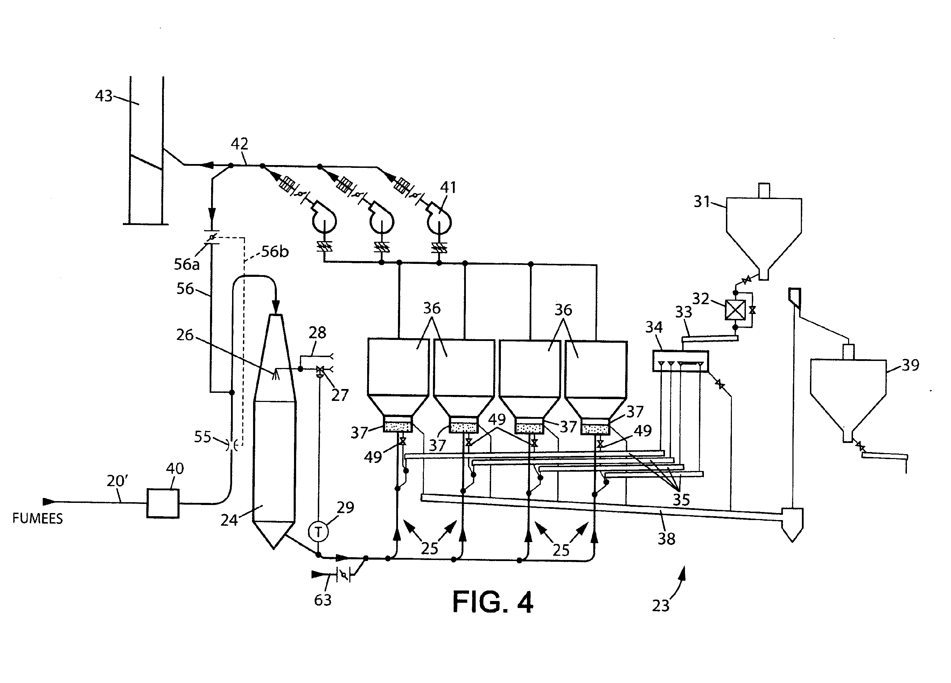

Les fumées de combustion extraites des feux par les rampes d'aspiration 11 sont collectées dans un conduit des fumées 20, par exemple un conduit cylindrique partiellement représenté sur la figure 2, avec un carneau des fumées 21 pouvant avoir une forme en plan en U (voir en pointillés sur la figure 1) ou pouvant faire le tour du four, et dont la sortie 22 dirige les fumées de combustion aspirées et collectées vers un centre de traitement des fumées (CTF) 23, représenté schématiquement sur la figure 3 et plus précisément sur la figure 4, et du type décrit dans FR-A-2887782, un autre type de CTF étant décrit dans DE 4002554 A1.

Ce CTF 23 est une installation d'épuration des fumées du FAC 1 et assure les fonctions suivantes :
- l'aspiration des fumées de cuisson émises par le FAC 1, avec une dépression contrôlée quasi constante,
- le refroidissement des fumées,
- une épuration à sec de ces fumées afin d'éliminer le fluor, les poussières et les goudrons que ces fumées contiennent, ces éléments polluants étant captés sous une forme permettant leur recyclage dans les cuves d'électrolyse de l'aluminium, et
- le rejet des fumées épurées à l'atmosphère.

Le procédé d'épuration à sec est basé sur la capacité d'un réactif pulvérulent, généralement de l'alumine, à assurer une neutralisation physico-chimique de ces polluants en captant le fluor et les hydrocarbures imbrûlés par adsorption ou captation. L'alumine pulvérulente est injectée dans le flux des fumées de combustion provenant du FAC 1, puis retenue dans des filtres en même temps que les poussières, après adsorption et/ou captation de la majeure partie des polluants : goudrons, fluor gazeux, dioxyde de soufre (SO₂). Le rendement d'arrêt des goudrons est d'autant meilleur qu'il s'agit d'éléments lourds (à poids moléculaire élevé, donc facilement condensables), tandis que les goudrons légers (non condensés) sont arrêtés à un moindre degré. L'alumine chargée, récupérée par la vidange des filtres, est ensuite recyclée pour partie en étant mélangée à de l'alumine fraîche et réinjectée dans le flux des fumées provenant du FAC 1, et pour le reste en étant envoyée aux cuves d'électrolyse de l'aluminium, où les éléments combustibles retenus dans l'alumine chargée sont brûlés, et le fluor recyclé sous une forme directement utilisable.

Les fonctions d'épuration des fumées de combustion assurées par le CTF 23 sont, dans l'ordre :
- le refroidissement dans une tour de refroidissement 24 du flux des fumées de combustion provenant du FAC 1,
- l'alimentation d'au moins un réacteur 25, mais de préférence de plusieurs réacteurs 25 en parallèle, en alumine pulvérulente (fraîche et recyclée),
- l'injection d'alumine dans chaque réacteur 25 avec répartition dans un flux de fumées de combustion traversant ce réacteur,
- la captation-adsorption des polluants, par l'alumine pulvérulente distribuée dans ledit flux,
- la filtration de l'alumine chargée des polluants et des poussières dudit flux,
- le recyclage de l'alumine chargée, par un nettoyage des filtres et l'évacuation de l'alumine chargée.

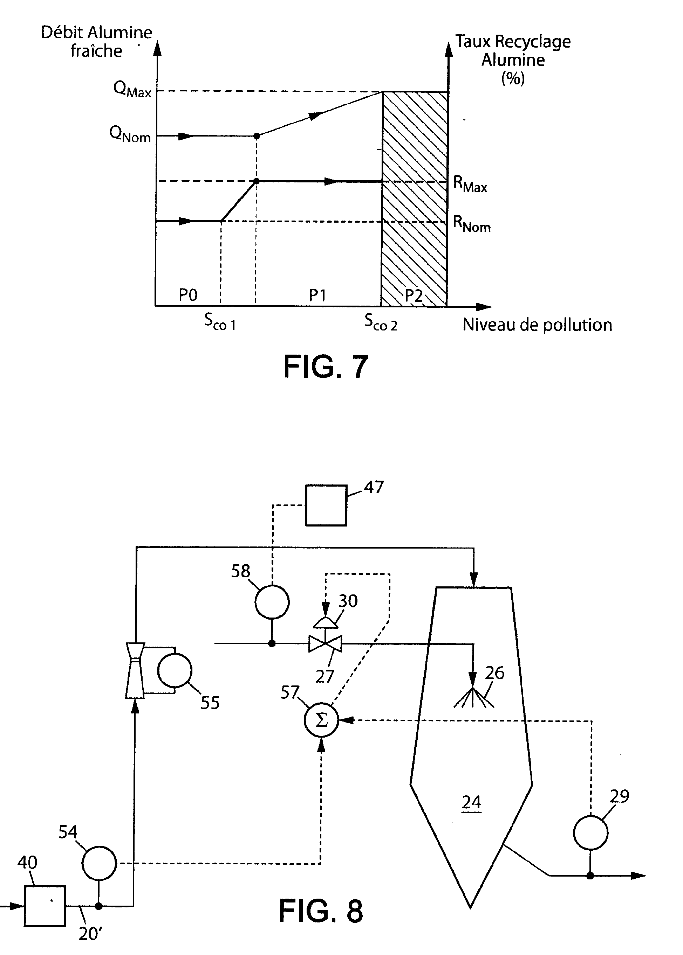

Le refroidissement des fumées consiste à abaisser leur température jusqu'à environ 100°C, afin de provoquer la condensation des hydrocarbures imbrûlés les plus lourds et les plus dangereux présents dans ces fumées et de baisser la température des fumées à une température acceptable par les tissus filtrants. Ce refroidissement est réalisé par évaporation totale d'eau injectée en fines gouttelettes dans la tour 24 par des pulvérisateurs, tels que celui schématisé en 26, et alimentés en eau par une vanne 27 et en air de pulvérisation par une conduite 28 débouchant dans la conduite d'eau entre la vanne 27 et le pulvérisateur 26. Cette pulvérisation fine permet d'obtenir une évaporation totale de l'eau injectée et ainsi d'éviter la formation d'acide fluorhydrique (HF) ou sulfurique (H2SO4) par condensation sur les parois internes de la tour 24. Comme montré sur la figure 8 annexée, qui représente schématiquement la commande du débit de la vanne 27 d'eau de refroidissement, ce débit peut être, dans l'état de la technique, contrôlé par une boucle de régulation qui est une boucle de contrôle par rétroaction, pour tendre à maintenir la température des fumées en sortie de la tour de refroidissement 24, et mesurée par un capteur de température 29, à une valeur constante, alignée sur une consigne de température, de sorte qu'un régulateur, sensible à un signal d'erreur entre la consigne et la température mesurée par le capteur 29, commande un actionneur 30 de manoeuvre de la vanne 27 de débit d'eau.

Il existe plusieurs types de régulations, qui ont toutes pour but d'injecter une quantité d'eau contrôlée, mais, qui, pour garantir une bonne taille des gouttelettes, font appel à différents principes (régulation de la pression eau et pression d'air constante, régulation des deux pressions en même temps, régulation des débits, ...).

Le circuit d'alimentation des réacteurs 25 en alumine fraîche comprend principalement un silo de stockage 31, alimentant lui-même, en aval, un système de criblage 32 et dosage 33, dont la sortie est reliée à un système de répartition 34 (les systèmes de dosage 33 et répartition 34 pouvant être regroupés en un seul dispositif) assurant la répartition de l'alumine fraîche de façon égale vers les différents réacteurs 25 et des aéro-glissières 35 alimentées en air de fluidisation (ou tout autre moyen de manutention), en nombre égal au nombre des réacteurs 25, et dont chacune alimente l'un respectivement des réacteurs 25 en alumine fraîche.

La captation des vapeurs de goudron et du fluor gazeux par l'alumine correspond précisément à la conjonction de deux phénomènes distincts, qui sont une captation mécanique de vésicules de goudron en surface et l'adsorption des vapeurs de goudron et de fluor à l'intérieur des pores des particules d'alumine.

Cette captation s'effectue dans les réacteurs 25, en général verticaux et de forme cylindrique ou à section transversale circulaire ou rectangulaire. L'alumine est injectée dans chaque réacteur 25 de la façon la plus homogène possible, afin de réduire la distance moyenne entre les molécules à capter et les grains d'alumine.

Après cette injection, la filtration de l'alumine chargée et des poussières est assurée par le gâteau filtrant qui se forme dans les filtres 36, généralement réalisés sur des manches filtrantes. Le nettoyage des filtres 36 par soufflage d'air à basse pression, par intermittence et en sens opposé (à contre-courant du flux à filtrer), est piloté par la perte de charge de ces filtres 36 ou par une minuterie. L'alumine chargée tombe dans un lit fluidisé entretenu dans des trémies 37 des filtres 36, d'où cette alumine chargée est ensuite en partie réinjectée dans les réacteurs 25 en étant mélangée à de l'alumine fraîche alimentée par l'aéro-glissière 35 correspondante, et en partie déchargée par un trop plein sur une aéro-glissière 38 l'évacuant vers un silo 39 de reprise d'alumine chargée.

Le recyclage d'alumine chargée dans les réacteurs 25 est mis en oeuvre pour augmenter le rendement de la fonction captation.

Aujourd'hui, le système de commande et régulation du FAC 1 et le système de commande et contrôle du CTF 23 fonctionnent de manière indépendante l'un de l'autre.

Il en résulte, notamment, que le fonctionnement du CTF 23 n'est pas nécessairement optimisé, compte tenu, en particulier, des conditions de débit et/ou de température et/ou de degré de pollution variables, voire rapidement variables, des fumées de combustion à la sortie du FAC 1 et dans le conduit des fumées 20, ainsi que dans le prolongement 20' de ce conduit des fumées, en aval de la sortie 22 du carneau 21 des fumées, et assurant la liaison avec le CTF 23. En particulier, pour des raisons de sécurité d'épuration, le débit de l'eau pulvérisée dans la tour de refroidissement 24 et/ou le débit du réactif, par exemple de l'alumine, mais qui peut également être un autre adsorbant, est ajusté pour convenir aux conditions les plus défavorables de pollution, température et débit notamment des fumées de cuisson à la sortie du FAC 1.

Le problème à la base de l'invention est de tendre à l'optimisation de la commande et du contrôle du CTF 23 en fonction des conditions de fonctionnement du FAC 1, et l'idée à la base de l'invention est de proposer un procédé d'optimisation de la commande d'un CTF 23 tenant compte d'interactions entre les fonctionnements du FAC 1 et du CTF 23, de sorte que, notamment, la mise en oeuvre du procédé de l'invention permette la mise en place d'interactions automatiques entre les systèmes de commande et contrôle du FAC 1 et du CTF 23, et cela, autant que possible, en utilisant, pour la commande et le contrôle du CTF 23, des données connues du système de commande et contrôle du FAC 1 et qui sont relatives à des paramètres de fonctionnement du FAC 1. De la sorte, le procédé d'optimisation de la commande du CTF 23 est d'une mise en oeuvre grandement facilitée par la transmission d'informations du système de commande et contrôle du FAC 1 au système de commande et contrôle du CTF 23.

A cet effet, le procédé d'optimisation de la commande d'un CTF, du type présenté ci-dessus, destiné à épurer des fumées de cuisson provenant d'un FAC du type également présenté ci-dessus, est tel que défini dans la revendication 1.

Dans le cas d'une variation du débit nominal de fonctionnement du CTF, le débit d'eau dans la tour de refroidissement, et/ou le débit de réactif frais et/ou le débit de réactif recyclé vont varier corrélativement à la variation dudit débit nominal de fonctionnement du CTF (variation du débit des fumées traitées).

Ainsi, le procédé de l'invention permet la mise en place d'une stratégie de régulation du CTF et visant à optimiser la consommation de réactif (alumine fraîche) et/ou la température des fumées dans la tour de refroidissement, afin de réduire la consommation de réactif et/ou d'optimiser la capture des polluants.

Comme déjà mentionné ci-dessus, dans le rappel de la structure et du fonctionnement d'un FAC du type concerné par l'invention, des matières organiques volatiles provenant du brai contenu dans les blocs carbonés sont émises en cours de cuisson dans les chambres en phase de préchauffage, et se retrouvent donc, au moins en partie, dans les fumées de cuisson dans le conduit des fumées.

Or, il a été noté par les inventeurs du procédé selon l'invention que le monoxyde de carbone (CO) est un gaz qui résulte typiquement d'une combustion incomplète, et constitue de ce fait un indicateur de la teneur en polluants dans les fumées de cuisson à l'entrée du CTF. Le niveau de pollution des fumées à l'entrée du CTF peut donc être corrélé à la teneur en CO mesurée dans les fumées de cuisson en sortie du FAC.

Avantageusement, le procédé consiste également à considérer que la teneur en CO des fumées de cuisson à la sortie du FAC est celle mesurée dans au moins une rampe d'aspiration du FAC ou la moyenne pondérée des teneurs en CO mesurées dans chacune des rampes d'aspiration en opération ou la teneur en CO mesurée dans le carneau des fumées en sortie de four

Ainsi, le procédé de l'invention comprend avantageusement de plus les étapes consistant à déterminer la teneur en CO des fumées à la sortie du FAC, et faire varier, dans le CTF, le débit de réactif frais et/ou le débit de réactif recyclé (ou le taux de recyclage du réactif) dans ledit réacteur en fonction de la teneur en CO, de sorte à optimiser la quantité de réactif utilisé en fonction du niveau de pollution desdites fumées de cuisson en sortie du FAC.

De manière pratique, le débit de réactif (alumine) frais et/ou le débit du réactif recyclé (l'alumine) (ou le taux de recyclage du réactif) est/sont commandé(s) dans ledit au moins un réacteur en fonction d'au moins un seuil de teneur en CO dans les fumées de cuisson en sortie du FAC.

Avantageusement, selon un mode de réalisation du procédé ne faisant intervenir qu'un faible nombre de seuils de teneur en CO et cependant d'une grande efficacité, le procédé consiste également à définir trois niveaux de pollution à l'aide de deux seuils différents de teneur en CO, dont un seuil bas (S_{co1}) et un seuil haut (S_{co2}) (avec S_{co2} > S_{co1}), à considérer que le niveau de pollution desdites fumées de cuisson est faible si la teneur en CO est ≤ au seuil bas, et à commander dans ce cas le fonctionnement du CTF en mode nominal défini par un débit nominal de réactif frais (alumine fraîche) et un taux de recyclage qui sont constants, à considérer que le niveau de pollution est moyen, si la teneur en CO est comprise entre les seuils bas et haut, et, dans ce cas, à commander une augmentation ou réduction du taux de recyclage du réactif en fonction de l'augmentation ou de la réduction de la teneur en CO et une alimentation en réactif frais à débit constant, aussi longtemps que le taux de recyclage maximum n'est pas atteint, et à considérer que le niveau de pollution des fumées est élevé, si la teneur en CO est ≥ au seuil haut, et dans ce cas à commander ledit réacteur avec un taux de recyclage de réactif et un débit de réactif frais qui sont maximum.

De plus, lorsque le niveau de pollution est moyen et si le taux de recyclage maximum du réactif est atteint, le procédé consiste en outre à augmenter le débit de réactif frais (alumine fraîche) en fonction de l'augmentation de la teneur en CO.

Avantageusement, le procédé de l'invention comprend de plus, lorsque le niveau de pollution est élevé, l'étape consistant à abaisser la consigne de température des fumées de cuisson dans la tour de refroidissement, ce qui permet de favoriser une meilleure condensation des fractions polluantes volatiles présentes dans les fumées de combustion à l'entrée de la tour de refroidissement du CTF.

De manière analogue, pour tenir compte de la température des fumées de cuisson en sortie du FAC qui peut être rapidement et/ou amplement variable, selon les configurations et conditions de fonctionnement du FAC, le procédé de l'invention comprend de plus une étape de correction anticipatrice ou de compensation de régulation du débit d'eau de refroidissement en fonction de la température desdites fumées de cuisson mesurée en sortie du FAC, par exemple dans au moins une rampe d'aspiration du FAC.

Le procédé de l'invention peut reprendre une mesure technique connue, à savoir que le débit de sortie d'une vanne d'alimentation en eau de la tour de refroidissement est modulé par une boucle de contrôle par rétroaction tendant à aligner la température des fumées détectées à la sortie de la tour de refroidissement sur une consigne de température, comme déjà mentionné ci-dessus, mais, dans ce cas, il comprend avantageusement de plus l'ajout d'une compensation par une boucle de contrôle prédictif en fonction de la température des fumées mesurée en sortie du FAC ou à l'entrée de la tour de refroidissement, qui anticipe le contrôle du débit d'eau injectée dans la tour de refroidissement en fonction de ladite température des fumées en sortie du FAC ou entrée de ladite tour, en appliquant à la commande issue de la boucle de contrôle par rétroaction une variation de commande positive ou négative résultant de ladite boucle de contrôle prédictif.

Toutefois, la compensation par la boucle de contrôle prédictif est désactivée, lorsqu'un brûleur d'appoint (servant à augmenter la température des fumées quand elles sont trop basses et ayant pour but d'éviter la condensation des goudrons sur les parois internes de conduits), disposé à la sortie du conduit des fumées, en amont de la tour de refroidissement, est en fonctionnement. En effet, ce brûleur d'appoint entre en fonctionnement pour relever la température des fumées à l'entrée de la tour de refroidissement, de sorte que le fonctionnement simultané de la boucle de contrôle prédictif aurait un effet antagoniste à celui souhaité et procuré par le fonctionnement du brûleur d'appoint.

En variante à l'étape de compensation par boucle de contrôle prédictif du débit d'eau de refroidissement dans la tour, le procédé de l'invention peut aussi comprendre, de plus, au moins une étape de calcul (en boucle) du débit requis d'eau injectée à la tour de refroidissement pour réguler la température des fumées en sortie de ladite tour, le calcul du débit d'eau requis se basant sur les valeurs du débit et de la température des fumées en sortie du FAC, et éventuellement, du débit et de la température de fumées de recirculation, et de la consigne de température des fumées à la sortie de la tour de refroidissement, le calcul du débit étant ajusté d'un facteur correcteur qui est fonction de l'écart entre ladite consigne et la mesure de la température en sortie de la tour.

Dans ce cas également, la boucle de calcul du débit d'eau requis est désactivée lorsqu'un brûleur d'appoint, disposé à la sortie du conduit des fumées, en amont de la tour de refroidissement, est en fonctionnement.

En outre, pour tenir compte de certaines configurations spécifiques de fonctionnement du FAC, le procédé de l'invention propose une stratégie de modulation du débit d'eau distribuée dans la tour de refroidissement, et, à cet effet, le procédé comprend de plus au moins une étape consistant à réduire, puis, après un intervalle de temps prédéterminé, augmenter le débit d'eau distribuée dans ladite tour de refroidissement quand une réduction puis une augmentation ample et rapide de la température et/ou des débits desdites fumées de cuisson sont attendues, en conséquence de l'une au moins de configurations spécifiques du FAC comprenant au moins une permutation d'au moins un feu du FAC, un virage d'au moins un feu du FAC, et un stationnement d'au moins un feu du FAC.

De plus, le procédé peut avantageusement comprendre au moins une étape consistant à faire re-circuler une partie des fumées traitées en les réinjectant en amont de la tour de refroidissement si les vitesses prévues d'écoulement desdites fumées dans le conduit des fumées sont trop faibles pour une bonne alimentation du CTF, et éventuellement une étape consistant à abaisser la température des fumées par admission d'air de conditionnement afin d'améliorer le rendement de captation

Comme déjà mentionné ci-dessus, certains des paramètres nécessaires à la mise en oeuvre du procédé de l'invention prennent des valeurs qui sont mesurées et, le plus souvent, également enregistrées au cours du fonctionnement du FAC, de sorte que le procédé de l'invention consiste en outre à commander le CTF en utilisant des informations transmises d'au moins un système de commande et régulation du FAC à au moins un système de commande et contrôle du CTF et relatives à la température et/ou la teneur en CO et/ou au débit des fumées de cuisson en sortie du FAC, afin de permettre l'optimisation du contrôle du CTF en fonction des données transmises par le système de régulation du FAC.

Il en résulte que le procédé de l'invention peut être mis en oeuvre pratiquement sans ajout d'une instrumentation de mesure supplémentaire, lorsque le FAC 1 est équipé d'une mesure de la teneur en CO, au niveau de la ou des rampes d'aspiration et/ou du carneau des fumées et/ou de la sortie du FAC 1, mais simplement par la communication sélective d'informations relatives à des données de mesure de certains paramètres du FAC, qui sont connues de son système de commande et régulation, au système de commande et contrôle du CTF pour que le fonctionnement de ce dernier soit mieux adapté au fonctionnement en temps réel du FAC. Dans le cas contraire, le FAC 1 et/ou l'entrée du CTF doit être équipé d'une telle mesure de la teneur en CO.

D'autres caractéristiques et avantages de l'invention ressortiront de la description donnée ci-dessous, à titre non limitatif, d'un exemple de réalisation décrit en référence aux dessins annexés sur lesquels :
- les figures 1 et 2 sont des vues schématiques respectivement en plan, et en vue partielle en perspective avec arrachement d'un FAC du type concerné par l'invention, et qui ont déjà été décrites ci-dessus,
- la figure 3 est une vue schématique en plan, analogue à la figure 1, du FAC de la figure 1 dont le système de commande et régulation coopère avec celui d'un CTF du type concerné par l'invention et également schématisé en plan sur la figure 3,
- la figure 4 est une vue schématique en élévation latérale d'un CTF du type concerné par l'invention et déjà décrite ci-dessus,
- la figure 5 est une courbe relative aux taux d'évaporation de matières volatiles émises par un bloc carboné tel qu'une anode en cours de préchauffage puis de cuisson dans un FAC selon les figures 1 et 2, en fonction du temps,
- la figure 6 est une courbe indicative de la teneur en CO en fonction de la teneur en imbrûlés (particules et composants insolubles) dans les fumées de cuisson en sortie du FAC,
- la figure 7 est un diagramme indiquant le débit d'alumine fraîche ainsi que le taux de recyclage de l'alumine en fonction du niveau de pollution, dans un exemple de procédé de l'invention à deux seuils de CO,
- la figure 8 est un schéma représentatif des boucles de commande du débit d'eau de la tour de refroidissement du CTF en fonction de deux mesures de température, respectivement en aval et en amont de la tour, et
- la figure 9 est un schéma fonctionnel des deux boucles de commande de la vanne de débit d'eau de la figure 8.

La figure 3 représente schématiquement en plan une installation combinant un FAC 1, tel que précédemment décrit en référence aux figures 1 et 2, et un CTF 23, tel que précédemment décrit en référence à la figure 4, et dont, conformément à l'invention, le CTF comporte des équipements complémentaires, précisés ci-dessous, venant s'ajouter à l'intercommunication entre les systèmes de commande et contrôle d'une part du FAC 1 et d'autre part du CTF 23, pour la mise en oeuvre du procédé de l'invention.

Sur la figure 3, le conduit des fumées 20 n'est que partiellement représenté, et se prolonge, au-delà de la sortie 22 du carneau des fumées 21, par un tronçon 20' du conduit des fumées raccordant cette sortie 22 à l'entrée de la tour de refroidissement 24, pour l'alimentation du CTF 23 en fumées à épurer, le flux des fumées refroidies en sortie de la tour 24 étant, comme représenté sur la figure 4, subdivisé en quatre flux dont chacun est admis dans l'un respectivement des quatre réacteurs 25 de mise en contact avec de l'alumine pulvérulente, et de sorte qu'après la traversée de ce réacteur 25 et du filtre 36 correspondant (voir figure 4), les fumées épurées sont évacuées par des ventilateurs de tirage 41 et une conduite de fumées épurées 42, dans une cheminée 43.

Le système de commande et contrôle 44 du FAC 1 reçoit, via un réseau de communication 45 et 46, des signaux représentatifs des teneurs en CO des températures et des débits des fumées de cuisson. Les teneurs en CO et les températures TASP des fumées de cuisson en sortie de chaque rampe d'aspiration 11 peuvent être mesurées dans la partie d'extrémité aval de chaque rampe d'aspiration 11, entre son raccordement au conduit des fumées 20 et la pipe d'aspiration 11 a la plus proche dudit conduit des fumées. La teneur en CO et la température des fumées de cuisson en sortie du FAC 1 peuvent être calculées par exemple en calculant la moyenne pondérée des teneurs en CO et des températures des fumées, mesurées à l'aide de détecteurs de CO 14 et capteurs de température 13 en fonction du débit dans chaque rampe d'aspiration 11. Les débits des fumées de cuisson extraites de chaque rampe d'aspiration 11 peuvent être calculés par sommation des débits mesurés dans chaque pipe d'aspiration 11 a de la rampe d'aspiration correspondante 11 par le débitmètre 12 correspondant.

En variante, la teneur en CO des fumées de cuisson et leur température peuvent être mesurées et enregistrées à partir d'au moins un analyseur-détecteur de CO et d'au moins un capteur de température disposés dans le carneau des fumées 21, à proximité de sa sortie 22 ou légèrement en aval de cette sortie 22, dans le tronçon 20' de conduit des fumées assurant le raccordement au CTF 23.

Chacun des systèmes de commande et contrôle 44 et 47 comprend au moins une unité de contrôle automatisée comportant des automates programmables, de manière bien connue.

Le système 47 prend en compte le signal déterminé comme représentant la teneur en CO des fumées à la sortie du FAC 1 comme le paramètre indicateur du niveau de pollution de ces fumées à l'entrée du CTF 23.

Le système 47 optimise la commande du CTF 23 en régulant, d'une part, le débit de la vanne 27 d'alimentation en eau de la tour de refroidissement 24, et, d'autre part, le débit et/ou le taux de recyclage de l'alumine dans chacun des réacteurs 25, en fonction de la teneur en CO dans les fumées qui est prise en compte comme indicateur des niveaux de pollution de ces fumées.

En particulier, le système 47 commande la variation, dans chacun des réacteurs 25 du CTF 23, du débit d'alumine fraîche alimentant ledit réacteur 25 par les dispositifs de dosage 32 et de répartition 34, ainsi que le débit de la recirculation d'alumine chargée par la commande de la vanne de recyclage 49, ou tout autre moyen de faire varier ce débit d'alumine chargé et recyclée, sur une conduite de recyclage reliant la trémie 37 située à la base du filtre 36 au réacteur 25. De la sorte, le système 47 peut commander une optimisation de la quantité d'alumine fraîche utilisée en fonction du niveau de pollution des fumées de cuisson en sortie du FAC 1.

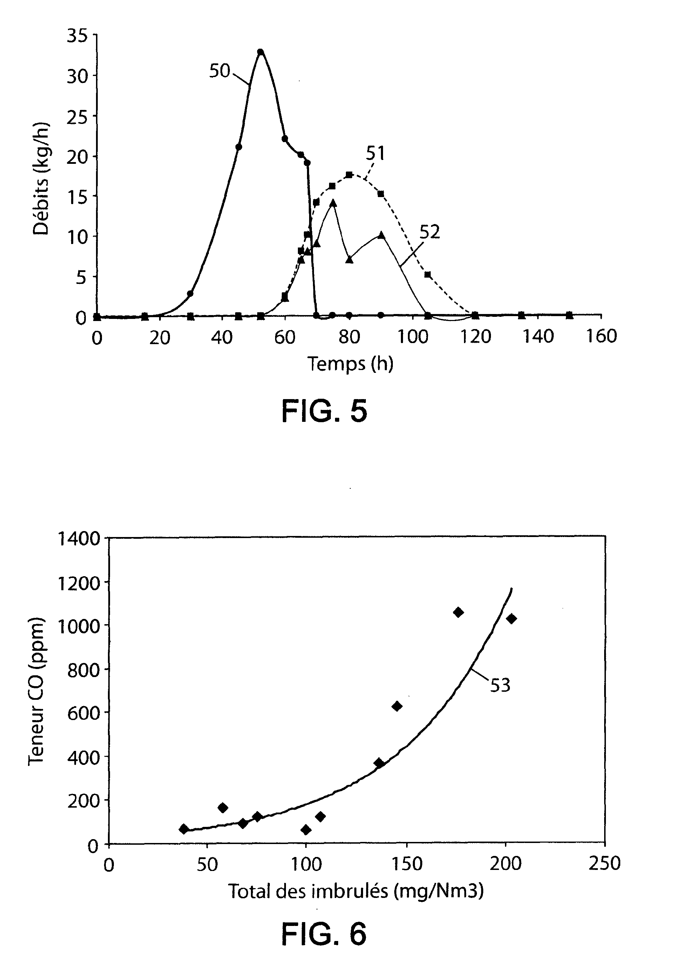

L'assimilation de la teneur en monoxyde de carbone (CO) des fumées à la sortie du FAC 1 à un paramètre représentatif du niveau de pollution des fumées à l'entrée du CTF 23 trouve sa justification dans les courbes des figures 5 et 6.

En effet, la figure 5 représente les taux d'évaporation de trois principales matières volatiles émises par une anode 5 au cours de son préchauffage et de sa cuisson dans le FAC 1, et, pour chacune de ces trois matières volatiles, la figure 5 indique en ordonnée les débits de ces matières exprimés en kilogrammes par heure (kg/h), en fonction du temps en abscisse exprimé en heures (h). La courbe 50, dont le pic est le plus élevé, correspond aux vapeurs de brai, tandis que la courbe 51, en pointillés et avec un pic de moyenne amplitude, correspond à l'hydrogène, et que la courbe 52, à deux pics de plus faible amplitude, correspond au méthane.

Le cycle de cuisson d'une anode durant, comme déjà dit, de l'ordre d'une centaine d'heures, et ces matières volatiles étant combustibles, on comprend qu'une majeure partie de celles-ci sera brûlée dans le FAC 1 et contribuera de manière significative (pour environ la moitié) à la production de chaleur nécessaire à la cuisson de l'anode. Il n'en reste pas moins que les fumées de combustion résultantes contiennent des imbrûlés, notamment des particules solides et hydrocarbures aromatiques polycycliques sous forme condensés et incondensés, et la courbe 53 de la figure 6, qui exprime la teneur en CO (en ppm) en fonction de la teneur des fumées en imbrûlés (le total des particules et des parties incondensées, exprimé en mg/Nm³ normé) montre clairement la corrélation entre la teneur en CO et le degré de pollution des fumées de cuisson, ces deux grandeurs étant liées l'une à l'autre par une fonction continument croissante correspondant à la courbe 53.

De manière pratique, le système 47 de commande du CTF 23 peut corréler le niveau de pollution des fumées à l'entrée du CTF 23 à au moins un et de préférence plusieurs seuils prédéfinis de teneurs en CO mesurés et enregistrés en sortie du FAC 1, et commander le débit d'alumine fraîche et le taux de recyclage d'alumine dans chaque réacteur 25 en fonction d'un ou plusieurs seuils de teneur en CO dans les fumées de cuisson en sortie du FAC 1.

Dans un exemple particulier de réalisation, à présent décrit en référence à la figure 7, le procédé n'utilise que deux seuils de CO, un seuil bas S_{co1} et un seuil haut S_{co2} > S_{co1}, à l'aide desquels on définit trois niveaux de pollution, dont un niveau faible Po, lorsque la teneur en CO est ≤ S_{co1}, un niveau de pollution moyen P1, lorsque la teneur en CO est comprise entre S_{co1} et S_{co2}, et un niveau de pollution élevé P2 si la teneur en CO mesurée est ≥ S_{co2}, comme indiqué sur l'axe des abscisses du diagramme de la figure 7.

Lorsque le niveau de pollution est faible Po, le système 47 de commande et contrôle du CTF 23 commande le fonctionnement de ce dernier en mode nominal, défini par un débit nominal d'alumine fraîche Q_{Nom}, comme indiqué sur l'axe des ordonnées de gauche du diagramme de la figure 7, et un taux de recyclage nominal R_{Nom} de l'alumine, comme indiqué sur l'axe des ordonnées de droite de la figure 7, ce débit nominal et ce taux de recyclage nominal étant constants.

Si le niveau de pollution est moyen P1, le système 47 commande une variation du taux de recyclage selon une fonction croissante, par exemple linéaire, de la teneur en CO jusqu'à atteindre le taux de recyclage maximum R_{Max}, pour une valeur de la teneur en CO intermédiaire entre les seuils S_{co1} et S_{co2}, alors que le débit d'alumine fraîche injectée reste constant, donc égal au débit nominal Q_{Nom} jusqu'à la valeur intermédiaire de la teneur en CO pour laquelle le taux de recyclage maximum R_{Max} est atteint. Au-delà de cette valeur de teneur en CO intermédiaire, à partir de laquelle le taux de recyclage reste maximum R_{Max}, le débit d'alumine fraîche varie selon une fonction croissante, par exemple linéaire, de la teneur en CO, jusqu'au seuil haut S_{co2}, comme représenté sur la figure 7.

Si le niveau de pollution est élevé P2, le taux de recyclage de l'alumine et le débit d'alumine fraîche sont maintenus constants à leur palier maximum, respectivement R_{Max} et Q_{Max}. De plus, afin de favoriser une meilleure condensation des fractions polluantes volatiles présentes dans les fumées entrant dans le CTF 23, la consigne de température des fumées à la sortie de la tour de refroidissement 24, prise en compte dans la boucle de contrôle par rétroaction précédemment décrite et comparée à la température des fumées mesurée par le capteur de température 29 en sortie de la tour 24, est une consigne qui est abaissée. Dans un premier temps, la boucle de contrôle par rétroaction est sensible à un signal d'erreur plus grand, correspondant à l'écart entre la consigne et la température T₂₉ mesurée par le capteur 29 en sortie de la tour 24, pour commander une augmentation du débit d'eau de pulvérisation délivrée par la vanne 27.

Sur la figure 7, le rectangle hachuré correspond à la zone de niveau de pollution élevé P2 pour laquelle une action est commandée sur la consigne de température des fumées dans la tour 24.

Mais de plus, une correction anticipatrice s'ajoute à celle de la boucle de contrôle par rétroaction sur la régulation du débit d'eau injectée par la vanne 27 dans la tour de refroidissement 24, en fonction des températures des fumées TASP mesurées dans des pipes d'aspiration 11a des rampes d'aspiration 11 du FAC 1, par les capteurs de température 13 (voir figure 2), ou mesurées en sortie du FAC 1 (par exemple par un ou plusieurs détecteurs de température implantés au niveau de la sortie 22 du carneau des fumées 21), ou encore mesurées par un capteur de température 54 à l'entrée du CTF 23, et plus précisément en amont de l'entrée de la tour de refroidissement 24, entre le brûleur d'appoint 40 et un débitmètre 55 implanté dans une gaine montante d'alimentation de la tour de refroidissement 24 en fumées de combustion, ce débitmètre 55 étant lui-même en amont de l'arrivée, dans cette gaine, d'une conduite 56 équipée d'un registre 56a commandé, par la ligne 56b, en fonction du débit mesuré par le débitmètre 55, pour la recirculation des fumées épurées depuis la conduite 42, afin d'assurer une vitesse minimum des gaz dans cette gaine montante d'alimentation de la tour 24.

Cette correction, en fonction de la température à l'aspiration TASP des fumées de combustion ou de la température donnée par le capteur 54, permet d'anticiper le contrôle du débit d'eau injectée par la vanne 27 à la tour 24 afin de réduire le risque de mouillage des parois latérales internes et du fond de la tour de refroidissement 24 par un arrosage excessif. Ce contrôle anticipatif consiste à appliquer à la commande issue de la boucle de contrôle par rétroaction de l'état de la technique, une variation de commande positive ou négative, qui est le résultat de la boucle de contrôle prédictif procurant un effet compensateur, la variable d'entrée de la boucle de contrôle prédictif étant la mesure de la température des fumées, donc soit la température en sortie de FAC, soit la température T₅₄ du capteur 54 en amont de la tour 24, et la commande de la boucle de contrôle prédictif s'ajoute à celle de la boucle de contrôle par rétroaction au niveau du sommateur 57 schématisé sur la figure 8, pour commander l'actionneur 30 de la vanne 27 de débit d'eau, ce débit d'eau étant connu du système 47 de commande grâce à un débitmètre 58 sur la conduite d'eau en amont de la vanne 27.

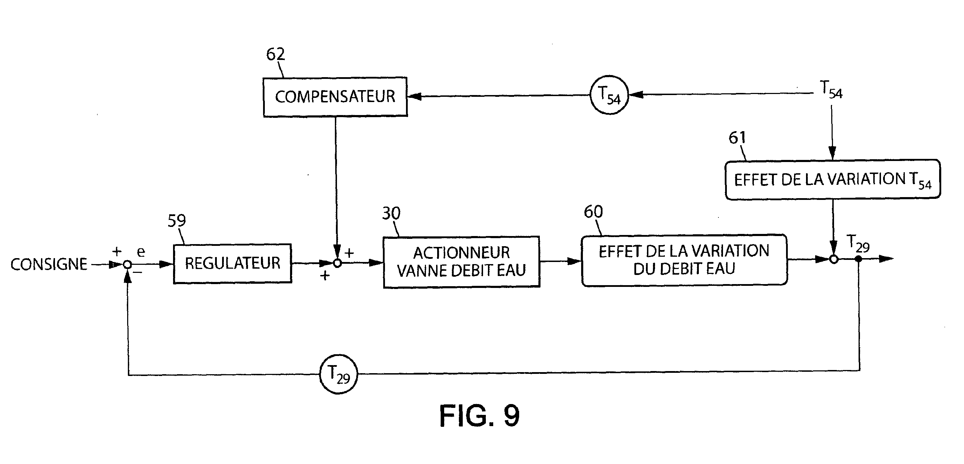

La figure 9 représente le schéma-bloc fonctionnel de la superposition des deux boucles de contrôle par rétroaction et de contrôle prédictif, la première comportant la mesure de la température T29 par le capteur de température 29 à la sortie de la tour de refroidissement 24, dont le signal correspondant est soustrait de la consigne de température pour générer un signal d'erreur e entré dans un régulateur 59 en aval du sommateur 57 qui commande l'actionneur 30 de la vanne 27 de débit d'eau pour produire un effet de la variation du débit d'eau représenté par le bloc 60, à savoir une variation de la température des fumées dans la tour 24, variation détectée à la sortie de cette tour 24 par le capteur 29, l'effet de la variation de la température T54 mesurée par le capteur 54 en amont de la tour 24, et tel que représenté par le bloc 61 s'ajoutant à l'effet du bloc 60 en amont de cette mesure de température par le capteur 29, en conséquence de l'effet de compensateur représenté dans le bloc 62 et s'ajoutant à la commande du régulateur 59 au niveau du sommateur 57.

Mais le compensateur 62 de la boucle de contrôle prédictif est désactivé lorsque le bruleur d'appoint 40 sur la sortie du conduit des fumées 20' et en amont du capteur de température 54 du CTF 23 est en fonctionnement, car l'effet du compensateur 62 est antagoniste de celui du bruleur d'appoint 40, dont la fonction est d'augmenter la température des fumées de combustion à l'entrée du procédé de refroidissement, en cas de besoin.

En variante, la régulation de débit d'eau injectée à la tour de refroidissement 24, pour réguler la température des fumées en sortie de la tour 24, peut être réalisée à partir du calcul (en boucle) du débit d'eau requis en se basant sur les valeurs du débit et de la température des fumées en sortie du FAC 1, et, éventuellement, du débit et de la température des fumées de recirculation (dans la conduite 56)" et de la consigne de la température des fumées en sortie de la tour de refroidissement 24. Le calcul du débit d'eau est ajusté d'un facteur correcteur fonction de l'écart entre la consigne et la mesure de la température des fumées en sortie de la tour 24. Le coefficient correcteur permet, en réalité, la prise en compte de la capacité calorifique des fumées, qui dépend de leur composition réelle.

Dans cette variante également, lorsque le brûleur d'appoint 40 à la sortie du conduit des fumées 20-20', en amont du capteur de température 54 (voir figure 8) et de l'entrée de la tour de refroidissement 24, est en fonctionnement, la boucle de calcul du débit d'eau requis est désactivée.

Le système 47 de commande et contrôle du CTF 23 commande également l'adaptation des modes de fonctionnement du CTF 23 à des configurations spécifiques de fonctionnement du FAC 1 pendant la cuisson des anodes, et en particulier aux permutations de feu, aux virages et aux stationnements de feu.

Une permutation de feu est, dans le FAC 1, une opération d'avancement de feu d'une chambre 2 à la chambre 2 immédiatement en aval par rapport au sens des fumées, et au cours de laquelle la rampe d'aspiration 11 du feu correspondant est déconnectée puis reconnectée au conduit 20 d'aspiration des fumées. On comprend qu'une permutation de feu génère une baisse des températures des fumées, ainsi que des variations des débits d'aspiration.

Un virage est une configuration ou situation pendant laquelle un feu est réparti sur les deux travées 1a et 1b du FAC 1, c'est-à-dire que les rampes 11 à 19 de ce feu sont, pour certaines, au-dessus de chambres 2 d'une travée 1a ou 1 b, et pour d'autres rampes au dessus de chambres 2 de l'autre travée 1b ou 1 a. Ce « feu », c'est à-dire cet ensemble de rampes, est donc soumis à des déperditions thermiques et des pertes de charge supplémentaires correspondant au passage et au mélange des fumées dans le carneau de virage 10 concerné. Au cours d'un virage, les débits des fumées et les gradients de température peuvent être réduits.

Un stationnement de feu correspond à une procédure spécifique permettant de stopper l'avancement du feu et de stationner les rampes 11 à 19 d'un feu sur des mêmes chambres 2 pendant une durée pouvant atteindre plusieurs jours. Cette procédure met en oeuvre une réduction importante des débits d'aspiration, un arrêt des zones de soufflage et de refroidissement, ainsi qu'une limitation de l'injection de combustibles dans la zone de chauffage.

En conséquence, au cours d'un stationnement de feu, la température et le débit des fumées à la sortie du FAC 1 et à l'entrée du CTF 23 sont très nettement diminués.

Parmi ces trois configurations spécifiques, les permutations de feu et les virages sont des traitements périodiques au cours de la cuisson des anodes, et dont l'occurrence est planifiée et enregistrée par le système 44 de commande et régulation du FAC 1. Par contre, les stationnements de feu sont des configurations particulières qui peuvent être enregistrées par ce même système 44.

En conséquence, à partir des informations recueillies et centralisées par le système 44 concernant ces configurations spécifiques, et du fait de l'intercommunication entre les systèmes 44 et 47 de commande et contrôle du FAC et du CTF 23, le système 47 peut commander le démarrage de modes de fonctionnement spécifiques du CTF 33 afin d'anticiper les variations de débit et de température des fumées à l'entrée du CTF 23, de sorte à atteindre le résultat principal consistant à éviter, le risque de mouillage des parois latérales internes et du fond de la tour 24 de refroidissement par arrosage excessif des fumées, devenues soudainement plus froides à raison du passage du FAC 1 dans l'une des trois configurations spécifiques précitées.

Ainsi, le système 47 de commande du CTF 23 peut commander une réduction puis une augmentation, après un intervalle de temps prédéterminé, du débit d'eau distribué par la vanne 27 dans la tour de refroidissement 24, quand une réduction puis une augmentation ample et rapide de la température et/ou des débits des fumées de cuisson à la sortie du FAC 1 sont attendues au niveau du CTF 23, dont le système 47 de commande a reçu des informations correspondantes du système 44 de commande du FAC 1, en conséquence d'une permutation de feu, d'un virage de feu ou d'un stationnement de feu dans le FAC 1.

Par exemple, lors d'un changement ou d'une permutation de feu, le débit aspiré des fumées, vu du CTF 23, est réduit d'un pourcentage compris dans une plage prédéterminée, connue notamment empiriquement par les enregistrements au cours de changements de feux antérieurs. Comme on connait également par avance la durée d'une telle réduction du débit aspiré (également connue par enregistrement au cours de changements de feux antérieurs), le système 47 de commande du CTF 27 peut prévoir, de manière certaine, la diminution nécessaire du débit d'eau, et donc la commander, et peut simultanément, augmenter la recirculation des fumées de combustion par la conduite 56 à l'entrée de la tour de refroidissement 24, si les vitesses prévues d'écoulement de ces fumées dans le conduit des fumées 20-20' sont trop faibles pour une bonne alimentation du CTF 23, dans lequel il est déjà connu d'admettre de l'air de conditionnement par une admission 63 (voir figure 4), dans les fumées à l'entrée des réacteurs 25, afin de refroidir ces fumées à une température plus appropriée aux traitements à subir dans les réacteurs 25 et filtres 36.

Toutes ces actions peuvent être commandées par le système 47 et appliquées rapidement dès le début d'un changement de feu, sans introduire de retard dans l'obtention des effets recherchés sur les fumées traitées, grâce à une boucle de réaction plus rapide et sans phénomène de pompage.

Le procédé de l'invention peut être mis en oeuvre sans nécessiter d'investissement matériel important lorsque le FAC est équipé d'installations de mesure de la teneur en CO et de débit des fumées de cuisson, puisqu'il permet de commander le CTF 23 en utilisant des informations transmises du système 44 de commande et régulation du FAC 1 au système 47 de commande et contrôle du CTF 23, ces informations étant relatives au moins à la température et/ou la teneur en CO et/ou au débit des fumées de cuisson en sortie du FAC 1, afin de permettre l'optimisation du contrôle du CTF 23 en fonction des données transmises par le système 44 de commande et régulation du FAC 1.

## Revendications

1. Procédé d'optimisation de la commande d'un centre (23) de traitement des fumées (CTF), destiné à épurer des fumées de cuisson provenant d'un four (1) à cuire (FAC) des blocs carbonés (5), destinés à l'électrométallurgie, le FAC (1) étant un four de cuisson du type dit « à feu tournant », dont les fumées de cuisson sont aspirées par au moins une rampe (11) d'aspiration du FAC (1) et collectées dans un conduit des fumées (20) dirigeant les fumées au CTF (23) comportant une tour de refroidissement (24) des fumées par pulvérisation d'eau (26) dans lesdites fumées à la sortie dudit conduit (20), et au moins un réacteur (25) de neutralisation physico-chimique des fumées par mise en contact des fumées avec un réactif pulvérulent, puis filtrage (36) du réactif chargé et des poussières des fumées, et recyclage dans ledit réacteur (25) d'au moins une fraction du réactif filtré et son mélange à du réactif frais, ledit procédé étant **caractérisé en ce qu'**il comprend au moins les étapes consistant à :
réguler (30) le débit d'eau (27) dans la tour de refroidissement (24), et/ou réguler le débit et/ou le taux de recyclage du réactif dans ledit réacteur (25),
en fonction d'au moins un paramètre indicateur d'un niveau de pollution des fumées à l'entrée du CTF (23), et à adopter la teneur en monoxyde de carbone CO des fumées à la sortie du FAC (1) comme ledit au moins un paramètre indicateur du niveau de pollution desdites fumées à l'entrée du CTF (23).

2. Procédé selon la revendication 1, **caractérisé en ce qu'**il consiste à considérer que la teneur en CO des fumées de cuisson à la sortie du FAC (1) est celle mesurée dans au moins une rampe d'aspiration (11) du FAC ou la moyenne pondérée des teneurs en CO mesurées dans chacune des rampes d'aspiration (11) en opération ou la teneur en CO mesurée dans un carneau des fumées (21) en sortie de four (1).

3. Procédé selon l'une quelconque des revendications 1 et 2, **caractérisé en ce qu'**il comprend de plus les étapes consistant à :
déterminer la teneur en CO des fumées à la sortie du FAC (1), et
faire varier, dans le CTF (23), le débit de réactif frais et/ou le débit de réactif recyclé dans ledit réacteur (25) en fonction de la teneur en CO, de sorte à optimiser la quantité de réactif utilisé en fonction du niveau de pollution desdites fumées de cuisson en sortie du du FAC (1).

4. Procédé selon la revendication 3, **caractérisé en ce que** le débit de réactif frais et/ou le débit du réactif recyclé est/sont commandé(s) dans ledit réacteur (25) en fonction d'au moins un seuil de teneur en CO dans les fumées de cuisson en sortie du FAC (1).

5. Procédé selon l'une quelconque des revendications 1 à 4, **caractérisé en ce qu'**il consiste également à définir trois niveaux de pollution à l'aide de deux seuils différents de teneur en CO, dont un seuil bas (S_{co1}) et un seuil haut (S_{co2}), avec S_{co2} > S_{co1}, à considérer que le niveau de pollution desdites fumées de cuisson est faible (P0) si la teneur en CO est ≤ au seuil bas, et à commander dans ce cas le fonctionnement du CTF (23) en mode nominal défini par un débit nominal de réactif frais (QNom) et un taux nominal de recyclage (Rnom) qui sont constants,
à considérer que le niveau de pollution est moyen (P1), si la teneur en CO est comprise entre les seuils bas et haut, et, dans ce cas, à commander une augmentation ou réduction du taux de recyclage du réactif en fonction de l'augmentation ou de la réduction de la teneur en CO et une alimentation en réactif frais à débit constant (Qnom), aussi longtemps que le taux de recyclage maximum (Rmax) n'est pas atteint, et
à considérer que le niveau de pollution des fumées est élevé (P2), si la teneur en CO est ≥ au seuil haut, et dans ce cas à commander ledit réacteur avec un taux de recyclage de réactif (Rmax) et un débit de réactif frais (Qmax) qui sont maximum.

6. Procédé selon la revendication 5, **caractérisé en ce qu'**il comprend de plus l'étape consistant, lorsque le niveau de pollution est moyen (P1), et si le taux de recyclage maximum (RMax) du réactif est atteint, à augmenter le débit de réactif frais en fonction de l'augmentation de la teneur en CO.

7. Procédé selon l'une quelconque des revendications 5 et 6, **caractérisé en ce qu'**il comprend de plus, lorsque le niveau de pollution est élevé (P2), l'étape consistant à :
abaisser la consigne de température des fumées de cuisson dans la tour de refroidissement (24).

8. Procédé selon l'une quelconque des revendications 1 à 7, **caractérisé en ce qu'**il comprend de plus une étape de correction anticipatrice de régulation du débit d'eau de refroidissement en fonction de la température desdites fumées de cuisson mesurée en sortie du FAC (1).

9. Procédé selon la revendication 8, **caractérisé en ce que** le débit de sortie d'une vanne (27) d'alimentation en eau de la tour (24) de refroidissement est modulé par une boucle de contrôle par rétroaction tendant à aligner la température des fumées (T29) détectées à la sortie de la tour (24) de refroidissement sur une consigne de température, et le procédé comprend de plus l'ajout d'une compensation (61) par une boucle de contrôle prédictif en fonction de la température des fumées (TASP, T54) mesurée en sortie du FAC (1) ou à l'entrée de la tour (24) de refroidissement, qui anticipe le contrôle du débit d'eau injectée dans la tour (24) de refroidissement en fonction de ladite température des fumées en sortie du FAC (1) ou entrée de ladite tour (24), en appliquant (57) à la commande issue de la boucle de contrôle par rétroaction une variation de commande positive ou négative résultant de ladite boucle de contrôle prédictif.

10. Procédé selon la revendication 9, **caractérisé en ce que** la compensation (61) par la boucle de contrôle prédictif est désactivée lorsqu'un brûleur d'appoint (40), disposé à la sortie du conduit des fumées (20'), en amont de la tour (24) de refroidissement, est en fonctionnement.

11. Procédé selon l'une quelconque des revendications 1 à 7 **caractérisé en ce qu'**il comprend de plus, au moins une étape de calcul du débit requis d'eau injectée (26) à la tour de refroidissement (24) pour réguler la température (29) des fumées en sortie de ladite tour (24), le calcul du débit d'eau requis se basant sur les valeurs du débit et de la température des fumées en sortie du FAC (1), et de la consigne de température de fumées à la sortie de la tour de refroidissement (24), le calcul du débit étant ajusté d'un facteur correcteur qui est fonction de l'écart entre ladite consigne et la mesure de la température (29) en sortie de la tour (24).

12. Procédé selon la revendication 11, **caractérisé en ce que** la boucle de calcul du débit d'eau requis est désactivée lorsqu'un brûleur d'appoint (40), disposé à la sortie du conduit des fumées (20'), en amont de la tour (24) de refroidissement, est en fonctionnement.

13. Procédé selon l'une quelconque des revendications 1 à 11, **caractérisé en ce qu'**il comprend, de plus, au moins une étape consistant à : réduire, puis, après un intervalle de temps prédéterminé, augmenter le débit d'eau distribuée dans ladite tour (24) de refroidissement quand une réduction puis une augmentation ample et rapide de la température et/ou des débits desdites fumées de cuisson en sortie du FAC (1) sont attendues, en conséquence de l'une au moins de configurations spécifiques du FAC (1) comprenant au moins une permutation d'au moins un feu du FAC, un virage d'au moins un feu du FAC, et un stationnement d'au moins un feu du FAC (1).

14. Procédé selon l'une quelconque des revendications 1 à 13, **caractérisé en ce qu'**il comprend, de plus, au moins une étape consistant à faire re-circuler une partie des fumées traitées en les réinjectant en amont de la tour de refroidissement (24), si les vitesses prévues d'écoulement desdites fumées dans le conduit des fumées (20, 20') sont trop faibles pour une bonne alimentation du CTF (23).

15. Procédé selon l'une quelconque des revendications 1 à 14, **caractérisé en ce qu'**il consiste, en outre, à commander le CTF (23) en utilisant des informations transmises d'au moins un système (44) de commande et régulation du FAC (1) à au moins un système (47) de commande et contrôle du CTF (23) et relatives à la température et/ou la teneur en CO et/ou au débit des fumées de cuisson en sortie du FAC (1), afin de permettre l'optimisation du contrôle du CTF (1) en fonction des données transmises par le système (44) de régulation du FAC (1).

## Claims

1. Method of optimizing the control of a fume treatment centre (FTC) (23), intended for scrubbing baking fumes originating from a baking furnace (BF) (1) for carbonaceous blocks (5), intended for electrometallurgy, the BF (1) being a baking furnace of the "ring" type, the baking fumes of which are extracted by at least one exhaust manifold (11) of the BF (1) and collected in a fume main (20) conveying the fumes to the FTC (23) comprising a tower (24) for cooling the fumes by spraying water (26) into said fumes at the outlet of said fume main (20), and at least one reactor (25) for the physico-chemical neutralization of the fumes by putting the fumes in contact with a powder reagent, then filtering (36) the loaded reagent and the fume dust, and recycling in said reactor (25) of at least one fraction of the filtered reagent and mixing of this with fresh reagent, said method being **characterized in that** it comprises at least the steps consisting of:
regulating (30) the water flow rate (27) in the cooling tower (24) and/or
regulating the reagent flow rate and/or recycling rate in said reactor (25),
in accordance with at least one parameter indicating a pollution level of the fumes at the intake of the FTC (23), and of adopting the carbon monoxide (CO) content of the fumes at the outlet of the BF (1) as a parameter indicating the pollution level of said fumes at the intake of the FTC (23).

2. Method according to claim 1, **characterized in that** it consists of considering that the CO content of the baking fumes at the outlet of the BF (1) is the content measured in at least one exhaust manifold (11) of the BF or the weighted average of the CO contents measured in each of the exhaust manifolds (11) in operation or the CO content measured in a fume flue (21) at the furnace (1) outlet.

3. Method according to any one of claims 1 and 2, **characterized in that** it also comprises the steps consisting of:
determining the CO content of the fumes at the outlet of the BF (1) and
varying, in the FTC (23), the fresh reagent flow rate and/or the recycled reagent flow rate in said reactor (25) in accordance with the CO content, so as to optimize the quantity of reagent used in accordance with the pollution level of said baking fumes at the outlet of the BF (1).

4. Method according to claim 3, **characterized in that** the fresh reagent flow rate and/or the recycled reagent flow rate is/are controlled in said reactor (25) in accordance with at least one threshold of CO content in the baking fumes at the outlet of the BF (1).

5. Method according to any one of claims 1 to 4, **characterized in that** it also consists of defining three pollution levels using two different CO content thresholds, namely a lower threshold (S_{CO1}) and an upper threshold (S_{CO2}) where S_{CO2} > S_{CO1}, considering the pollution level of said baking fumes low (P0) if the CO content is ≤ the lower threshold, and in this case controlling the operation of the FTC (23) in nominal mode defined by a nominal flow rate of fresh reagent (QNom) and a nominal recycling rate (RNom) that are constant,
considering the pollution level medium (P1) if the CO content is comprised between the lower and upper thresholds, and, in this case, controlling an increase or reduction in the reagent recycling rate in accordance with the increase or reduction in the CO content and a fresh reagent supply at a constant flow rate (QNom), as long as the maximum recycling rate (RMax) has not been reached, and
considering the fume pollution level high (P2) if the CO content is ≥ the upper threshold, and in this case controlling said reactor with a maximum reagent recycling rate (RMax) and fresh reagent flow rate (QMax).

6. Method according to claim 5, characterized that it also comprises the step consisting of, when the pollution level is medium (P1) and if the maximum reagent recycling rate (RMax) has been reached, increasing the fresh reagent flow rate in accordance with the increase in CO content.

7. Method according to any one of claims 5 and 6, **characterized in that** it also comprises, when the pollution level is high (P2), the step consisting of:
reducing the temperature set point of the baking fumes in the cooling tower (24).

8. Method according to any one of claims 1 to 7, **characterized in that** it also comprises a step of anticipatory correction of the regulation of the cooling water flow rate in accordance with the temperature of said baking fumes measured at the outlet of the BF (1).

9. Method according to claim 8, **characterized in that** the output flow rate of a water supply valve (27) of the cooling tower (24) is modulated by a feedback loop that tends to align the temperature of the fumes (T29) detected at the outlet of the cooling tower (24) on a temperature set point, and the method also comprises the addition of compensation (61) by a predictive control loop in accordance with the temperature of the fumes (TASP, T54) measured at the outlet of the BF (1) or at the intake of the cooling tower (24), which anticipates the control of the flow rate of the water injected into the cooling tower (24) in accordance with said temperature of the fumes at the outlet of the BF (1) or at the intake of said tower (24), by applying (57) a positive or negative command variation resulting from said predictive control loop to the command originating from the feedback loop.

10. Method according to claim 9, **characterized in that** the compensation (61) by the predictive control loop is disabled when an auxiliary burner (40), arranged at the outlet of the fume main (20'), upstream of the cooling tower (24), is in operation.

11. Method according to any one of claims 1 to 7, **characterized in that** it also comprises at least one step of calculating the required flow rate of water injected (26) into the cooling tower (24) to regulate the temperature (29) of the fumes at the outlet of said tower (24), the calculation of the required water flow rate being based on the values of the flow rate and temperature of the fumes at the outlet of the BF (1) and of the temperature set point of the fumes at the outlet of the cooling tower (24), the flow rate calculation being adjusted by a correction factor that is a function of the deviation between said set point and the temperature measurement (29) at the outlet of the tower (24).

12. Method according to claim 11, **characterized in that** the calculation loop of the required water flow rate is disabled when an auxiliary burner (40), arranged at the outlet of the fume main (20'), upstream of the cooling tower (24), is in operation.

13. Method according to any one of claims 1 to 11, **characterized in that** it also comprises at least one step consisting of reducing and then, after a predetermined time interval, increasing the flow rate of water distributed in said cooling tower (24) when a reduction and then a considerable and rapid increase in the temperature and/or flow rates of said baking fumes at the outlet of the BF (1) are expected, as a result of at least one specific configuration of the BF (1) comprising at least one switch of at least one fire of the BF, a crossover of at least one fire of the BF and an immobilization of at least one fire of the BF (1).

14. Method according to any one of claims 1 to 13, **characterized in that** it also comprises at least one step consisting of recirculating some of the treated fumes by reinjecting them upstream of the cooling tower (24), if the predicted velocities of flow of said fumes in the fume main (20, 20') are too low for satisfactory supply of the FTC (23).

15. Method according to any one of claims 1 to 14, **characterized in that** it also consists of controlling the FTC (23) using information sent from at least one command and regulation system (44) of the BF (1) to at least one command and control system (47) of the FTC (23) relating to the temperature and/or CO content and/or flow rate of the baking fumes at the outlet of the BF (1), in order to enable the optimization of the control of the FTC (23) in accordance with the data sent by the regulation system (44) of the BF (1).

## Patentansprüche

1. Verfahren zur Optimierung der Steuerung einer zentralen Abgasbehandlungsanlage (CTF) (23), die dazu bestimmt ist, Brennabgase zu reinigen, die aus einem Ofen (1) zum Brennen (FAC) von Kohlenstoffblöcken (5) stammen, welche für die Elektrometallurgie bestimmt sind, wobei es sich bei dem FAC (1) um einen Brennofen handelt, dessen Bauart als "Ringkammer" bezeichnet wird und dessen Brennabgase mittels mindestens eines Absaugrohrs (11) vom FAC (1) abgesaugt und in einer Abgasleitung (20) gesammelt werden, welche die Abgase der CTF (23) zuführt, die einen Turm (24) zum Abkühlen der Abgase durch Einsprühen von Wasser (26) in die Abgase an der Austrittsöffnung der Leitung (20) aufweist, und mindestens einen Reaktor (25) zur physikalisch-chemischen Neutralisierung der Abgase, indem die Abgase mit einem pulverförmigen Reagenz in Kontakt gebracht werden, woraufhin das befrachtete Reagenz und die Stäube von den Abgasen abfiltriert (36) werden und mindestens eine Fraktion des abfiltrierten Reagenzes in den Reaktor (25) zurückgeführt und mit frischem Reagenz vermischt wird, wobei das Verfahren **dadurch gekennzeichnet ist, dass** es mindestens die folgenden Schritte umfasst:
Regulieren (30) der Wasserflussrate (27) im Kühlturm (24), und/oder
Regulieren der Flussrate und/oder des Anteils des Reagenzes, das in den Reaktor (25) zurückgeführt wird,
in Abhängigkeit von mindestens einem Parameter, der einen Verunreinigungsgrad der Abgase an der Eintrittsöffnung der CTF (23) anzeigt, und Übernehmen des Kohlenmonoxidgehalts CO der Abgase an der Austrittsöffnung des FAC (1) als mindestens einen Parameter, der den Verunreinigungsgrad der Abgase an der Eintrittsöffnung der CTF (23) anzeigt.

2. Verfahren nach Anspruch 1, **dadurch gekennzeichnet, dass** es darin besteht, als Gehalt an CO der Brennabgase an der Austrittsöffnung des FAC (1) denjenigen anzusehen, welcher in dem mindestens einen Absaugrohr (11) des FAC gemessen wird, oder den gewichteten Mittelwert der CO-Gehalte, die in jedem der in Betrieb befindlichen Absaugrohre (11) gemessen werden, oder den CO-Gehalt, der in einem Abgasabzugsschacht (21) an der Austrittsöffnung des Ofens (1) gemessen wird.

3. Verfahren nach einem beliebigen der Ansprüche 1 und 2, **dadurch gekennzeichnet, dass** es darüber hinaus die folgenden Schritte umfasst:
Bestimmen des CO-Gehalts der Abgase an der Austrittsöffnung des FAC (1), und
Verändern, innerhalb der CTF (23), der Flussrate an frischem Reagenz und/oder der Flussrate an Reagenz, das in den Reaktor (25) zurückgeführt wird, in Abhängigkeit vom CO-Gehalt, um auf diese Weise die Menge an verwendetem Reagenz in Abhängigkeit vom Verunreinigungsgrad der Brennabgase an der Austrittsöffnung des FAC (1) zu optimieren.

4. Verfahren nach Anspruch 3, **dadurch gekennzeichnet, dass** die Flussrate an frischem Reagenz und/oder die Flussrate an zurückgeführtem Reagenz innerhalb des Reaktors (25) in Abhängigkeit von mindestens einem Schwellenwert des CO-Gehalts in den Brennabgasen an der Austrittsöffnung des FAC (1) gesteuert wird/werden.

5. Verfahren nach einem beliebigen der Ansprüche 1 bis 4, **dadurch gekennzeichnet, dass** es darin besteht, weiterhin drei Verunreinigungsgrade mit Hilfe von zwei verschiedenen Schwellenwerten des CO-Gehalts zu definieren, wobei einer davon ein niedriger Schwellenwert (SCO1) und einer ein hoher Schwellenwert (SCO2) ist, wobei SCO2 > SCO1 ist, und den Verunreinigungsgrad der Brennabgase als gering (P0) anzusehen, wenn der CO-Gehalt ≤ dem niedrigen Schwellenwert ist, und in diesem Falle den Betrieb der CTF (23) derart zu steuern, dass sie im Nennwertmodus läuft, welcher durch einen Nennwert der Flussrate des frischen Reagenzes (QNom) und einen Nennwert des Rückführungsanteils (Rnom), jeweils von konstanter Größe, definiert ist,
den Verunreinigungsgrad als mittel (P1) anzusehen, wenn der CO-Gehalt zwischen dem niedrigen und dem hohen Schwellenwert liegt, und in diesem Falle derart zu steuern, dass der Rückführungsanteil des Reagenzes in Abhängigkeit von der Erhöhung oder Verringerung des CO-Gehalts gesteigert oder gesenkt wird und frisches Reagenz mit konstanter Flussrate (Qnom) zugeführt wird, solange der maximale Rückführungsanteil (Rmax) nicht erreicht ist, und
den Verunreinigungsgrad der Abgase als hoch (P2) anzusehen, wenn der CO-Gehalt ≥ dem hohen Schwellenwert ist, und in diesem Falle den Reaktor derart zu steuern, dass der Rückführungsanteil des Reagenzes (Rmax) und die Flussrate an frischem Reagenz (Qmax) ihre Maximalwerte annehmen.

6. Verfahren nach Anspruch 5, **dadurch gekennzeichnet, dass** es darüber hinaus den Schritt umfasst, der darin besteht, die Flussrate des frischen Reagenzes in Abhängigkeit von der Erhöhung des CO-Gehalts zu steigern, wenn der Verunreinigungsgrad mittel (P1) ist und wenn der Rückführungsanteil des Reagenzes seinen Maximalwert (RMax) erreicht.

7. Verfahren nach einem beliebigen der Ansprüche 5 und 6, **dadurch gekennzeichnet, dass** es darüber hinaus die folgenden Schritte umfasst, wenn der Verunreinigungsgrad hoch (P2) ist:
Absenken des Sollwerts der Temperatur der Brennabgase im Kühlturm (24).

8. Verfahren nach einem beliebigen der Ansprüche 1 bis 7, **dadurch gekennzeichnet, dass** es darüber hinaus einen Schritt der vorgreifenden Korrektur zur Regulierung der Kühlwasserflussrate in Abhängigkeit von der Temperatur der Brennabgase, die an der Austrittsöffnung des FAC (1) gemessen wird, umfasst.

9. Verfahren nach Anspruch 8, **dadurch gekennzeichnet, dass** die Austrittsflussrate eines Ventils (27) zur Versorgung des Kühlturmes (24) mit Wasser mittels einer Schleife zur Rückkopplungsteuerung moduliert wird, welche tendenziell bewirkt, dass sich die Temperatur der Abgase (T29), die an der Austrittsöffnung des Kühlturmes (24) detektiert werden, einem Temperatursollwert angleicht, und das Verfahren umfasst darüber hinaus die zusätzliche Durchführung eines Ausgleichs (61) mittels einer Steuerschleife, die aufgrund von Vorhersagewerten wirkt, in Abhängigkeit von der Temperatur der Abgase (TASP, T54), die an der Austrittsöffnung des FAC (1) oder an der Eintrittsöffnung des Kühlturmes (24) gemessen wird, wobei diese vorgreifend die Flussrate des Wassers, das in den Kühlturm (24) eingeleitet wird, in Abhängigkeit von der Temperatur der Abgase an der Austrittsöffnung des FAC (1) oder an der Eintrittsöffnung des Turmes (24) steuert, indem der Steuerbefehl, welcher von der Schleife zur Rückkopplungsteuerung stammt, einer positiven oder negativen Steuerungsänderung unterzogen (57) wird, die sich aus der Steuerschleife ergibt, welche aufgrund von Vorhersagewerten wi rkt.

10. Verfahren nach Anspruch 9, **dadurch gekennzeichnet, dass** der Ausgleich (61), welcher mittels der Steuerschleife erfolgt, die aufgrund von Vorhersagewerten wirkt, deaktiviert wird, wenn ein Zusatzbrenner (40) in Betrieb ist, der an der Austrittsöffnung der Abgasleitung (20') angeordnet ist, welche sich stromaufwärts des Kühlturms (24) befindet.

11. Verfahren nach einem beliebigen der Ansprüche 1 bis 7, **dadurch gekennzeichnet, dass** es darüber hinaus, mindestens einen Schritt des Berechnens der Flussrate des Wassers umfasst, das in den Kühlturm (24) eingeleitet (26) werden muss, um die Temperatur (29) der Abgase an der Austrittsöffnung des Turmes (24) zu regulieren, wobei die Berechnung der erforderlichen Wasserflussrate auf den Werten der Flussrate und der Temperatur der Abgase an der Austrittsöffnung des FAC (1) und auf dem Temperatursollwert der Abgase an der Austrittsöffnung des Kühlturms (24) beruht, wobei auf die Berechnung der Flussrate ein Korrekturfaktor angewendet wird, der von der Abweichung zwischen dem Sollwert und der Messung der Temperatur (29) an der Austrittsöffnung des Turms (24) abhängt.

12. Verfahren nach Anspruch 11, **dadurch gekennzeichnet, dass** die Schleife zur Berechnung der erforderlichen Wasserflussrate deaktiviert wird, wenn ein Zusatzbrenner (40) in Betrieb ist, der an der Austrittsöffnung der Abgasleitung (20') angeordnet ist, welche sich stromaufwärts des Kühlturms (24) befindet.

13. Verfahren nach einem beliebigen der Ansprüche 1 bis 11, **dadurch gekennzeichnet, dass** es darüber hinaus mindestens einen Schritt umfasst, der darin besteht: die Flussrate des Wassers, das in den Kühlturm (24) abgegeben wird, zu senken und nach einem vorbestimmten Zeitintervall zu steigern, wenn eine Senkung mit anschließender kräftiger und schneller Erhöhung der Temperatur und/oder der Flussraten der Brennabgase an der Austrittsöffnung des FAC (1) infolge mindestens einer spezifischen Konfiguration des FAC (1) zu erwarten ist, wobei letztere mindestens einen Positionswechsel mindestens eines Feuers des FAC, einen Richtungswechsel mindestens eines Feuers des FAC und eine bewegungsfreie Stellung mindestens eines Feuers des FAC (1) umfasst.

14. Verfahren nach einem beliebigen der Ansprüche 1 bis 13, **dadurch gekennzeichnet, dass** es darüber hinaus mindestens einen Schritt umfasst, der darin besteht, einen Teil der behandelten Abgase zurückzuführen, wobei diese stromaufwärts des Kühlturms (24) wieder eingeleitet werden, wenn die voraussichtlichen Strömungsgeschwindigkeiten der Abgase in der Abgasleitung (20, 20') für eine zweckmäßige Versorgung der CTF (23) zu gering sind.

15. Verfahren nach einem beliebigen der Ansprüche 1 bis 14, **dadurch gekennzeichnet, dass** es darüber hinaus darin besteht, die CTF (23) unter Verwendung von Informationen zu steuern, die von mindestens einem System (44) zur Steuerung und Regulierung des FAC (1) an mindestens ein System (47) zur Steuerung und Überwachung der CTF (23) übertragen werden und die Temperatur und/oder den CO-Gehalt und/oder die Flussrate der Brennabgase an der Austrittsöffnung des FAC (1) betreffen, damit auf diese Weise die Steuerung der CTF (1) in Abhängigkeit von den Daten optimiert wird, welche vom System (44) zur Regulierung des FAC (1) übertragen werden.
